# EUROPEAN PATENT APPLICATION

(11) **EP 2 626 201 A1**
(43) Date of publication of application: **14.08.2013**
(21) Application number: 12159795.9
(22) Date of filing: 16.03.2012
(51) Int. Cl.: B32B 15/08, G02B 5/20

(54) **Highly transparent solar film having excellent oxidation resistance**

(30) Priority: 10.02.2012 KR 20120013628
(71) Applicant: NDFOS Co., Ltd., Chungbuk 369-822 (KR)
(72) Inventor: Kim, Kwang Won, 407-310 Incheon, (KR)
(74) Representative: Dr. Weitzel & Partner

(57) **Abstract**

Disclosed herein is a highly transparent solar film having excellent oxidation resistance, which includes: a release layer; a sticking agent layer formed on the release layer; an oxidation-preventing layer formed on the sticking agent layer; a metal layer formed on the oxidation-preventing layer; a primer layer formed on the metal layer; a first film layer formed on the primer layer; and a hard coating layer. The highly transparent solar film employs an acid-free or low-acid sticking agent and comprises the oxidation-preventing layer and the film layer, so that the metal layer is prevented from being oxidized by acid components and the penetration of water and gases, whereby the highly transparent solar film has excellent oxidation resistance.

## Description

### CROSS-REFERENCE TO RELATED APPLICATION

This application is based on and claims priority from Korean Patent Application No. 10-2012-0013628 filed on February 10, 2012 in the Korean Intellectual Property Office, the disclosure of which is incorporated herein in its entirety by reference.

### BACKGROUND OF THE INVENTION

### Field of the Invention

The present invention relates to a highly transparent solar film which is applied to the glass of cars, buildings and the like to block sunlight, and more particularly to a highly transparent solar film which employs an acid-free or low-acid sticking agent and comprises an oxidation-preventing layer, and thus has excellent oxidation resistance.

### Description of the Prior Art

A solar film is attached to the glass of cars, buildings and the like to block sunlight or privacy or increase cooling and heating efficiency. Recently, the solar film has been increasingly used for attachment to the front and side glass of cars.

A conventional solar film for attachment to cars is prepared by forming a hard coating layer on the upper side of a substrate made of polyester and applying an adhesive to the lower side of the substrate having the hard coating layer formed thereon. This solar film had a problem of low sunlight blocking efficiency.

In an attempt to solve this problem, a metal is formed on one side of a substrate made of polyester to improve the sunlight blocking efficiency of the solar film. However, the solar film having this structure has a problem in that the acid component of the sticking agent and the penetration of water and gases cause the oxidation of the metal layer, thus deteriorating the physical properties of the solar film.

In addition, the above-described conventional solar film has a problem in that the sticking agent component is transferred to the glass surface in a process in which the solar film is attached to the glass side of cars, thus reducing the process efficiency.

### SUMMARY OF THE INVENTION

Accordingly, the present invention has been made in view of the problems occurring in the prior art, and it is an object of the present invention to provide a highly transparent solar film having excellent oxidation resistance, in which a metal layer is formed so that the solar cell shows an excellent sunlight blocking effect.

Another object of the present invention is to provide a highly transparent solar film having excellent oxidation resistance, in which an acid-free or low-acid sticking agent is used and an oxidation-preventing layer is formed to block the penetration of water or gases, thereby inhibiting the oxidation of the metal layer.

Still another object of the present invention is to provide a highly transparent solar film, in which a sticking agent which is not transferred to an object such as glass is used to increase process efficiency.

Yet another object of the present invention is to provide a highly transparent solar film having excellent oxidation resistance, in which a film layer consisting of a polyester film having a haze of 1.0% or less is formed such that the solar film has excellent transparency.

The objects of the present invention are accomplished by providing a highly transparent solar film having excellent oxidation resistance, which comprises: a release layer; a sticking agent layer formed on the release layer; an oxidation-preventing layer formed on the adhesive layer; a metal layer formed on the oxidation-preventing layer; a primer layer formed on the metal layer; a first film layer formed on the primer layer; and a hard coating layer.

According to a preferred feature of the present invention, the solar film further comprises: a second film layer interposed between the sticking agent layer and the oxidation-preventing layer; and an adhesive layer interposed between the second film layer and the oxidation-preventing layer to allow the second film layer to adhere to the oxidation-preventing layer.

According to a further preferred feature of the present invention, the second film layer comprises a polyester film having a haze of 1.0% or less.

According to a further preferred feature of the present invention, the adhesive layer comprises a urethane-based adhesive.

According to a further preferred feature of the present invention, the sticking agent layer comprises 100 parts by weight of 2-ethylhexylacrylate, 15-30 parts by weight of methyl acrylate, 15-45 parts by weight of n-butyl acrylate and 3-10 parts by weight of 2-hydroxyethyl methacrylate.

According to a further preferred feature of the present invention, the sticking agent layer further contains 1-7 parts by weight of acrylic acid.

According to a further preferred feature of the present invention, the oxidation-preventing layer comprises one or more selected from the group consisting of polyurethane, an acryl melamine nitrocellulose copolymer, and polyester.

According to a further preferred feature of the present invention, the metal layer is formed by aluminum deposition or metal sputtering.

According to a further preferred feature of the present invention, the primer layer comprises one or more selected from the group consisting of polyester, an acrylonitrile melamine copolymer, and urethane.

According to a further preferred feature of the present invention, the first film layer comprises a polyester film having a haze of 1.0% or less.

According to a further preferred feature of the present invention, the hard coating layer comprises urethane acrylate, trimethylolpropane triacrylate, a photoinitiator, a slip lubricant and a diluent solvent.

### BRIEF DESCRIPTION OF THE DRAWINGS

The above and other objects, features and advantages of the present invention will be more clearly understood from the following detailed description taken in conjunction with the accompanying drawing, in which:

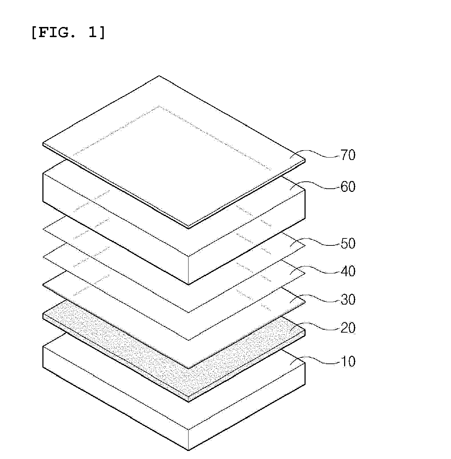

FIG. 1 is an exploded perspective view showing a highly transparent solar film having excellent oxidation resistance according to one embodiment of the present invention; and

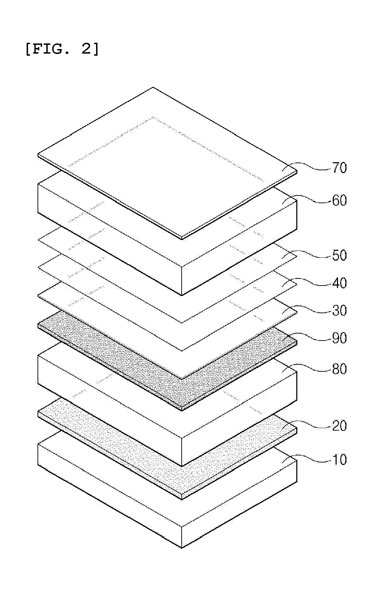

FIG. 2 is an exploded perspective view showing a highly transparent solar film having excellent oxidation resistance according to another embodiment of the present invention

### DETAILED DESCRIPTION OF THE INVENTION

Hereinafter, preferred embodiments of the present invention and the physical properties of each component will be described in detail. It is to be understood, however, that these embodiments will be set forth in detail so that a person skilled in the art can easily carry out the present invention, and these embodiments are not intended to limit the sprit and scope of the present invention.

Referring to the figures, the highly transparent solar film having excellent oxidation resistance according to the present invention comprises: a release layer 10; an adhesive layer 20 formed on the release layer 10; an oxidation-preventing layer 30 formed on the sticking agent layer 20; a metal layer 40 formed on the oxidation-preventing layer 30; a primer layer 50 formed on the metal layer 40; a first film later 60 formed on the primer layer 50; and a hard coating layer 70 formed on the first film layer 60.

The release layer 10 is formed to a thickness of 23-50 µm and is made of a polyester film. It serves to prevent the surface of the sticking agent layer 20 from being contaminated.

The release layer 10 is removed before the highly transparent solar film having excellent oxidation resistance according to the present invention is applied to a glass surface or the like.

The sticking agent layer 20 is formed on the release layer 10 to a thickness of 3-10 µm and serves to allow the highly transparent solar film having excellent oxidation resistance according to the present invention to adhere to a glass surface. It comprises a sticking agent containing 100 parts by weight of 2-ethylhexyl acrylate, 15-30 parts by weight of methyl acrylate, 15-40 parts by weight of n-butyl acrylate, and 3-10 parts by weight of 2-hydroxyethyl methacrylate. The adhesive in the adhesive layer has a pH of 5-7, and thus does not substantially oxidize the metal layer.

The sticking agent contains 2-hydroxyethyl methacrylate acting as a functional group, which increases wetting properties and is crosslinked to increase the molecular weight of the adhesive, thereby preventing the adhesive from being transferred to a glass surface when the highly transparent solar film having excellent oxidation resistance according to the present invention is applied to the glass surface of cars or buildings.

In addition, the sticking agent layer may further contain 1-7 parts by weight of acrylic acid, which acts as a functional group, similar to the above-described 2-hydroxyethyl methacrylate. The sticking agent layer 20 further containing acrylic acid has improved adhesive strength and is further prevented from being transferred to a glass surface.

The sticking agent 20 containing acrylic acid has a pH of 3-4, and in order to prevent the metal layer 40 from being oxidized by the acid component of the acrylic acid, the oxidation-preventing layer 30 is formed on the sticking agent layer 20.

The oxidation-preventing layer 30 is formed on the sticking agent layer 20 to a thickness of 0.2-2 µm and serves to prevent the metal layer 40 from being oxidized by the acid component contained in the adhesive forming the sticking agent layer 20. The oxidation-preventing layer is made of one or more selected from polyurethane resin, an acryl melamine nitrocellulose copolymer, and polyester.

Moreover, the oxidation-preventing layer 30 made of the above-described component serves to inhibit the oxidation of the metal layer 40 by blocking the penetration of water or gases in addition to the acid component contained in the sticking agent layer 20.

The metal layer 40 is formed on the oxidation-preventing layer 30 to a thickness of 0.02-0.1 µm and serves to block sunlight. It is formed by aluminum deposition or metal sputtering on the oxidation-preventing layer 30.

The metal that is used in the metal sputtering process is not specifically limited, so long as it shows the effect of blocking sunlight and can be formed on the oxidation-preventing layer 30 by the sputtering process. Preferably, the metal may be copper, indium tin oxide (ITO), nickel or chromium.

The primer layer 50 is formed on the metal layer 40 to a thickness of 0.1-2 µm and is made of one or more selected from the group consisting of polyester, an acrylonitrile melamine copolymer, and urethane. The primer layer 50 serves to increase the adhesion between the metal layer 40 and the first film layer 60, thereby preventing separation between the metal layer 40 and the first film layer 60.

In addition, the primer layer 50 serves to inhibit the penetration of water into the metal layer 40, thereby further increasing the oxidation resistance of the highly transparent solar film having excellent oxidation resistance according to the present invention.

The first film layer 60 is formed on the primer layer 50 to a thickness of 23-75 µm and is made of a polyester film, in which the polyester film has high transparency corresponding to a haze of 1.0% or less, and thus allows to obtain a clear visual field. In addition, it increases the stiffness of the solar film, thereby improving the workability of the solar film.

If the first film layer 60 is formed to a thickness of less than 23 µm, the solar film will be wrinkled or crumpled when it is applied to a solar film, so that the appearance of the solar film will become poor and the workability thereof will be reduced. On the other hand, if the thickness of the first film layer 60 is more than 75 µm, the solar film will be very difficult to apply to a glass surface, and thus cannot be applied to, for example, the front glass of cars.

The hard coating layer 70 is formed on the first film layer 60 to a thickness of 2-3 µm and serves to improve the appearance of the highly transparent solar film of the present invention and to prevent the solar film being scratched due to external impact.

The hard coating layer 70 comprises urethane acrylate, trimethylolpropane triacrylate, a photoinitiator, a slip lubricant and a diluent solvent, in which the urethane acrylate is in the form of an oligomer and the trimethylolpropane triacrylate is in the form of a monomer.

In addition, preferably, the photoinitiator comprises L-hydroxycyclohexylphenylketone, the slip lubricant comprises polydimethylsiloxane that is a modified polyester, and the diluent solvent is methyl ethyl ketone or isopropyl alcohol.

In the above-described solar film comprising the release layer 10, the sticking agent layer 20, the oxidation-preventing layer 30, the metal layer 40, the primer layer 50, the first film layer 60 and the hard coating layer 70, the sticking agent layer 20 comprises an acid-free or low-acid sticking agent which is not transferred to a glass surface or the like. Thus, the sticking agent layer 20 shows excellent fixing efficiency when the solar film is attached to a glass surface or the like, and the oxidation of the metal layer 40 by the acid component of the sticking agent layer 20 after attachment of the solar film is inhibited. Moreover, the metal layer 40 having excellent sunlight blocking efficiency is formed in the solar film so that the solar film shows an excellent sunlight blocking effect. Furthermore, the oxidation-preventing layer 30 is formed in the solar film, and thus the oxidation of the metal layer 40 is inhibited. In addition, the solar film of the present invention allows to obtain a clear visual field, and thus is suitable for application to the front glass of cars.

In another embodiment, the highly transparent solar film having excellent oxidation resistance according to the present invention may further comprise: a second film layer 80 between the sticking agent layer 20 and the oxidation-preventing layer 30; and an adhesive layer 90 which is interposed between the second film layer 80 and the oxidation-preventing layer 30 to allow the second film 80 to adhere to the oxidation-preventing layer 30.

The second film layer 80 is made of a polyester film and is formed to a thickness of 23-75 µm, in which the polyester film of the second film layer 80 has high transparency corresponding to a haze of 1.0% or less, and thus allows to obtain a clear visual field. In addition, the polyester film serves to increase the stiffness of the solar film, thereby further increasing the efficiency of the process for attaching the solar film to a glass surface.

The adhesive layer 90 is formed to a thickness of 2-10 µm and is interposed between the second film layer 80 and the oxidation-preventing layer 30 to serve to allow the second film layer 80 to adhere to the oxidation-preventing layer 30. It contains no acid or contains a trace amount of acid. In addition, it is made of a urethane-based adhesive having a glass transition temperature (Tg) of 80 to 120 □, and thus has excellent adhesion and further increases working efficiency when applying the solar film to a glass surface or the like.

Furthermore, the adhesive layer 90 may further contain organic dyes which give various colors to the solar film.

The solar film that further comprises the second film layer 80 and the adhesive layer 90 has excellent stiffness which increases working efficiency, but does not show a visual field that allows the solar film to be applied to the front glass of cars. Thus, this solar film is preferably applied to the side glass of cars or the glass surface of buildings.

As described above, the highly transparent solar film having excellent oxidation resistance according to the present invention comprises the metal layer having an excellent sunlight-blocking effect, and thus shows an excellent sunlight-blocking effect.

Also, the solar film of the present invention employs an acid-free or low-acid sticking agent and comprises the oxidation-preventing layer which prevents the metal layer from being oxidized by the acid component of the sticking agent layer or the penetration of water and gases, and thus it shows excellent oxidation resistance.

Moreover, the solar film of the present invention employs a sticking agent which is not transferred to an object such as glass, and thus it shows excellent process efficiency.

In addition, the solar film of the present invention comprises the film layer made of a polyester film having a haze of 1.0% or less, and thus it has excellent transparency.

Although the preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A highly transparent solar film having excellent oxidation resistance, which comprises:
a release layer;
a sticking agent layer formed on the release layer;
an oxidation-preventing layer formed on the adhesive layer;
a metal layer formed on the oxidation-preventing layer;
a primer layer formed on the metal layer;
a first film layer formed on the primer layer; and
a hard coating layer.

2. The highly transparent solar film of claim 1, which further comprises:
a second film layer interposed between the sticking agent layer and the oxidation-preventing layer; and
an adhesive layer interposed between the second film layer and the oxidation-preventing layer to allow the second film layer to adhere to the oxidation-preventing layer.

3. The highly transparent solar film of claim 2, wherein the second film layer comprises a polyester film having a haze of 1.0% or less.

4. The highly transparent solar film of claim 2, wherein the adhesive layer comprises a urethane-based adhesive.

5. The highly transparent solar film of claim 1, wherein the sticking agent layer comprises 100 parts by weight of 2-ethylhexylacrylate, 15-30 parts by weight of methyl acrylate, 15-45 parts by weight of n-butyl acrylate and 3-10 parts by weight of 2-hydroxyethyl methacrylate.

6. The highly transparent solar film of claim 5, wherein the sticking agent layer further contains 1-7 parts by weight of acrylic acid.

7. The highly transparent solar film of claim 1, wherein the oxidation-preventing layer comprises one or more selected from the group consisting of polyurethane, an acryl melamine nitrocellulose copolymer, and polyester.

8. The highly transparent solar film of claim 1, wherein the metal layer is formed by aluminum deposition or metal sputtering.

9. The highly transparent solar film of claim 1, wherein the primer layer comprises one or more selected from the group consisting of polyester, an acrylonitrile melamine copolymer, and urethane.

10. The highly transparent solar film of claim 1, wherein the first film layer comprises a polyester film having a haze of 1.0% or less.

11. The highly transparent solar film of claim 1, wherein the hard coating layer comprises urethane acrylate, trimethylolpropane triacrylate, a photoinitiator, a slip lubricant and a diluent solvent.
